# EUROPEAN PATENT APPLICATION

(11) **EP 3 789 868 A1**
(43) Date of publication of application: **10.03.2021**
(21) Application number: 20194013.7
(22) Date of filing: 02.09.2020
(51) Int. Cl.: G06F 3/12

(54) **PRINTING SYSTEM, PRINTING DEVICE, AND CONTROL METHOD OF PRINTING SYSTEM**

(30) Priority: 04.09.2019 JP 2019161321
(71) Applicant: Seiko Epson Corporation, Tokyo 160-8801 (JP)
(72) Inventor: NARITA, Kazuki, Suwa-shi, Nagano 392-8502 (JP)
(74) Representative: Miller Sturt Kenyon

(57) **Abstract**

A printing system includes a printing device, a terminal device, and a storage device, in which the terminal device transmits a first request to the printing device, and the printing device determines whether or not to permit the terminal device to log in to the printing device when the first request is received from the terminal device, stores combination information indicating a combination of terminal device identification information and inter-terminal device communication information when the terminal device is permitted to log in to the printing device, and executes a first command instructing the printing device to execute processing with respect to the storage device when a combination of transmission source identification information indicating a transmission source of the first command and inter-transmission source communication information unique to communication between the printing device and the transmission source matches the combination indicated by the combination information in a case in which the first command is received after the terminal device is permitted to log in to the printing device.

## Description

### BACKGROUND

### 1. Technical Field

The present disclosure relates to a printing system, a printing device, and a control method of a printing system.

### 2. Related Art

Research and development are being conducted on printing devices capable of connecting to a plurality of terminal devices to be capable of communication.

It is possible to control the printing device from each of a plurality of connected terminal devices. Therefore, there is a possibility that an unintended terminal device is connected to the printing device and that the printing device is subjected to unauthorized use by an unintended user. Unauthorized use of the printing device must be suppressed.

In this regard, there is known a printing device that controls logging into the printing device itself from a connected terminal device based on user identification information identifying a user (refer to JP-A-2001-125759). Here, logging in from one device X1 to another device X2 refers to connection authentication from the device X1 to the other device X2.

The printing device described in JP-A-2001-125759 is capable of suppressing unauthorized use by controlling logging in based on user identification information. However, the management of the user identification information is performed by the user themselves. Therefore, the user identification information of a user among the users of the plurality of terminal devices connected to the printing device may become known to a malicious third party. As a result, the printing device may be connected to a terminal device operated by a third party and may be used in an unauthorized manner via the terminal device.

### SUMMARY

According to an aspect of the present disclosure, there is provided a printing system including a printing device including a printing section, a terminal device that communicates with the printing device, and a storage device connected to the printing device, in which the terminal device transmits, to the printing device, a first request for requesting login to the printing device, and the printing device determines whether or not to permit the terminal device to log in to the printing device when the first request is received from the terminal device, stores combination information indicating a combination of terminal device identification information assigned to the terminal device and terminal device communication information relating to communication between the printing device and the terminal device when the terminal device is permitted to log in to the printing device, and executes a first command when a combination of transmission source identification information indicating a transmission source of the first command and transmission source communication information relating to communication between the printing device and the transmission source matches the combination indicated by the combination information in a case in which the first command instructing a process with respect to the storage device is received after the terminal device is permitted to log in to the printing device.

According to another aspect of the present disclosure, there is provided a printing device that communicates with a terminal device and is connected to a storage device, the printing device including a printing section that executes printing, in which the printing device determines whether or not to permit the terminal device to log in to the printing device when a first request for requesting login to the printing device is received from the terminal device, stores combination information indicating a combination of terminal device identification information assigned to the terminal device and terminal device communication information relating to communication between the printing device and the terminal device when the terminal device is permitted to log in to the printing device, and executes a first command instructing the printing device to execute processing with respect to the storage device when a combination of transmission source identification information indicating a transmission source of the first command and transmission source communication information relating to communication between the printing device and the transmission source matches the combination indicated by the combination information in a case in which the first command is received from the terminal device after the terminal device is permitted to log in to the printing device.

According to still another aspect of the present disclosure, there is provided a control method of a printing system including a printing device provided with a printing section, a terminal device that communicates with the printing device, and a storage device connected to the printing device, the control method including transmitting, by the terminal device, to the printing device, a first request for requesting login to the printing device, a determination step of the printing device determining whether or not to permit the terminal device to log in to the printing device when the printing device receives the first request from the terminal device, storing, by the printing device, combination information indicating a combination of terminal device identification information assigned to the terminal device and terminal device communication information relating to communication between the printing device and the terminal device when the printing device permits the terminal device to log in to the printing device, and executing, by the printing device, a first command instructing the printing device to execute processing with respect to the storage device when a combination of transmission source identification information indicating a transmission source of the first command and transmission source communication information unique to communication between the printing device and the transmission source matches the combination indicated by the combination information in a case in which the printing device receives the first command from the terminal device after the terminal device is permitted to log in to the printing device.

### BRIEF DESCRIPTION OF THE DRAWINGS

FIG. 1 is a diagram illustrating an example of a configuration of a printing system according to an embodiment.
FIG. 2 is a diagram illustrating an example of a functional configuration of a printing device control section.
FIG. 3 is a diagram illustrating an example of a flow of a process in which a terminal device controls a printing device.
FIG. 4 is a diagram illustrating an example of the flow of a process performed by the printing device when controlled by the terminal device.
FIG. 5 is a diagram illustrating an example of the flow of a process performed by a storage device when a second request is received from the printing device.
FIG. 6 is a diagram illustrating an example of the flow of a process performed by the printing device when transaction identification information is received.
FIG. 7 is a diagram illustrating an example of the flow of a process performed by the terminal device when the transaction identification information is received.

### DESCRIPTION OF EXEMPLARY EMBODIMENTS

### Embodiment

Hereinafter, an embodiment will be described with reference to the drawings. Configuration of Printing System 1

First, the configuration of the printing system 1 according to the embodiment will be described.

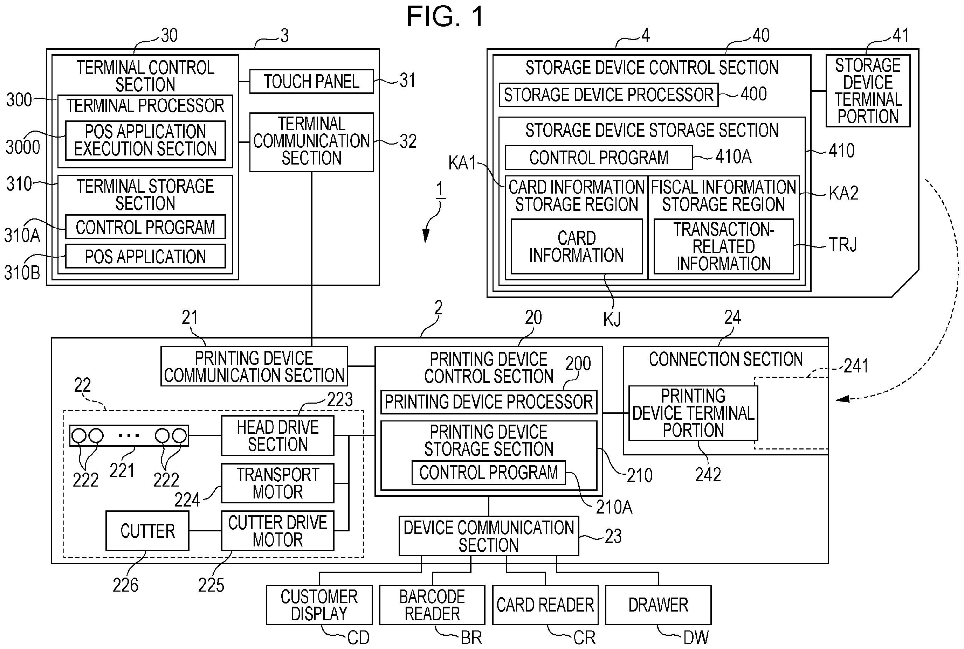

FIG. 1 is a diagram illustrating an example of a configuration of the printing system 1 according to the embodiment.

The printing system 1 is provided with a printing device 2, a terminal device 3, and a storage device 4.

The printing system 1 is a POS (Point Of Sale) system used in businesses such as a retail business and food and a beverage business, for example. Here, although the retail business is a shopping center, a convenience store, in-vehicle sales, or the like, for example, the retail business is not limited thereto. The food and beverage business includes, but is not limited to, restaurants, cafeterias, bars, and the like. The printing system 1 has a function of performing accounting according to products purchased by a customer, a function of printing and issuing a slip such as a receipt according to the accounting, and the like.

The terminal device 3 is an information processing device such as a tablet PC (Personal Computer), a notebook PC, a desktop PC, a multifunctional mobile phone terminal (smartphone), a mobile phone terminal, or a PDA (Personal Digital Assistant), for example. Hereinafter, as an example, description will be given of a case in which the terminal device 3 is a tablet PC in which a touch panel 31 is provided in a wide region on the front surface. Application software that functions as a POS terminal is installed in the terminal device 3. Hereinafter, for convenience of description, the application software will be referred to as a POS application. The terminal device 3 may be a POS-dedicated terminal device having only a function as a POS terminal. The terminal device 3 may be configured integrally with the printing device 2.

The terminal device 3 is provided with a terminal control section 30, the touch panel 31, and a terminal communication section 32.

The terminal control section 30 controls the entirety of the terminal device 3. The terminal control section 30 is provided with a terminal processor 300 and a terminal storage section 310.

The terminal processor 300 is a CPU (Central Processing Unit), an MPU (Micro Processing Unit), or the like, for example. The terminal processor 300 executes various programs.

In the terminal control section 30, the terminal processor 300 reads and executes a control program 310A stored in the terminal storage section 310 from the terminal storage section 310, and performs various processes through the cooperation of hardware and software. Here, a POS application 310B is installed in the terminal device 3 as an example of the POS application.

The POS application 310B causes the terminal processor 300 to function as a POS application execution section 3000. In other words, the terminal processor 300 functions as the POS application execution section 3000 by reading and executing the POS application 310B from the terminal storage section 310.

The terminal storage section 310 stores programs to be executed by the terminal processor 300, data to be processed by the terminal processor 300, and the like. More specifically, the terminal storage section 310 stores the control program 310A executed by the terminal processor 300 and other various data. The terminal storage section 310 includes a non-volatile storage region that stores programs, data, and the like in a non-volatile manner. The terminal storage section 310 may be provided with a volatile storage region and may configure a working area that temporarily stores a program to be executed by the terminal processor 300, data to be processed, and the like.

The touch panel 31 is provided with a display panel such as a liquid crystal display panel and a touch sensor provided to overlap the display panel or a touch sensor provided integrally with the display panel. The display panel displays various images under the control of the terminal control section 30. The touch sensor detects a touch operation and outputs information indicating the detected touch operation to the terminal control section 30. The terminal control section 30 executes a process corresponding to the information indicating the input touch operation based on the input from the touch sensor.

The terminal communication section 32 is configured by communication hardware according to a predetermined communication standard and performs communication with the printing device 2 under the control of the terminal control section 30. Examples of the communication hardware include hardware such as a communication circuit, a communication port, a communication substrate, and a communication connector. The communication standard used between the terminal communication section 32 and the printing device 2 may be a standard related to wired communication or a standard related to wireless communication. Examples of standards related to wired communication include serial communication standards such as USB (Universal Serial Bus) and RC (Recommended Standard) 232C, parallel communication standards such as IEEE (Institute of Electrical and Electronics Engineers, registered trademark) 1284, Ethernet (registered trademark) and the like. Examples of standards relating to wireless communication include communication standards relating to wireless LANs (Local Area Network) such as Wi-Fi (registered trademark), and communication standards relating to short-range wireless communication such as Bluetooth (registered trademark).

The printing device 2 is a thermal printer that stores roll paper as a print medium and prints characters, images, and the like by forming dots on the stored roll paper with a line-type thermal head 221. In other words, the printing method of the printing device 2 is a thermal method. The printing method of the printing device 2 may be another printing method such as an inkjet method instead of the thermal method. The print head of the printing device 2 may be a serial type instead of the line type.

The printing device 2 includes a printing device control section 20, a printing device communication section 21, a printing section 22, a device communication section 23, and a connection section 24.

The printing device control section 20 controls the entirety of the printing device 2. The printing device control section 20 includes a printing device processor 200 and a printing device storage section 210.

The printing device processor 200 is a CPU, an MPU, or the like, for example. The printing device processor 200 executes various programs.

In the printing device control section 20, the printing device processor 200 reads and executes the control program 210A stored in the printing device storage section 210 from the printing device storage section 210 and performs various processes through the cooperation of hardware and software.

The printing device storage section 210 stores a program to be executed by the printing device processor 200, data to be processed by the printing device processor 200, and the like. More specifically, the printing device storage section 210 stores a control program 210A to be executed by the printing device processor 200 and other various data, for example. The printing device storage section 210 includes a non-volatile storage region that stores programs, data, and the like in a non-volatile manner. The printing device storage section 210 may be provided with a volatile storage region and may configure a working area that temporarily stores a program to be executed by the printing device processor 200, data to be processed, and the like.

The printing section 22 executes printing based on a print command received from the terminal device 3 under the control of the printing device control section 20. The print command is a command instructing the printing of characters, images, and the like onto the roll paper and includes character codes and a command for printing the character codes, and the like. The print command received from the terminal device 3 is a command of a command system corresponding to the printing device 2.

The printing section 22 includes the thermal head 221, a head drive section 223, a transport motor 224, a cutter drive motor 225, and a cutter 226.

The thermal head 221 includes a plurality of heating elements 222 configured of resistors arranged in an intersecting direction that intersects the transport direction of the roll paper. A direction perpendicular to the transport direction is an example of a direction intersecting the transport direction. The thermal head 221 causes the heating element 222 to generate heat when energized to give heat to the printing surface of the roll paper. Accordingly, the thermal head 221 prints characters, images, or the like on the printing surface of the roll paper.

The head drive section 223 is provided with the hardware necessary for driving the thermal head 221 such as a circuit. The head drive section 223 controls the energization of the heating element 222 of the thermal head 221 under the control of the printing device control section 20.

The transport motor 224 causes the transport roller to rotate and transports the roll paper in the transport direction under the control of the printing device control section 20.

The cutter drive motor 225 drives a movable blade configuring the cutter 226 to slide toward a fixed blade and cuts the roll paper under the control of the printing device control section 20.

The device communication section 23 is provided with an interface board including a port conforming to the USB standard, a port conforming to a serial communication standard other than USB, a port conforming to the parallel communication standard, a port conforming to a communication standard relating to wired LAN, and other ports. It is possible to connect a device to each of the ports. The device communication section 23 communicates with various devices connected to the printing device 2 via the port under the control of the printing device control section 20. The device communication section 23 may be provided with a wireless communication function and may be configured to perform wireless communication with various devices.

In the example illustrated in FIG. 1, a customer display CD, a barcode reader BR, a card reader CR, and a drawer DW are connected to the printing device 2 as such devices.

The customer display CD displays information relating to accounting under the control of the printing device control section 20. A customer who makes an account at the cashier counter may visually recognize the information displayed on the customer display CD.

The barcode reader BR reads the barcode attached to the product, the packaging of the product, or the like and outputs the read information indicating the read result to the device communication section 23. The device communication section 23 outputs the read information input from the barcode reader BR to the printing device control section 20.

The card reader CR magnetically reads information recorded on a magnetic card type recording medium such as a credit card or a membership card and outputs the read information indicating the read result to the device communication section 23. The device communication section 23 outputs the read information input from the card reader CR to the printing device control section 20.

The drawer DW is provided with a tray that stores cash and the like and a mechanism that allows the tray to be pulled out from the main body of the drawer DW. The device communication section 23 is provided with a connector conforming to the RJ (Registered Jack) standard, for example, is connected to the drawer DW via a cable, and outputs a control signal to the drawer DW.

The connection section 24 is formed in the housing of the printing device 2 and is provided with a slot portion 241 into which it is possible to insert and remove a memory card with respect to the printing device 2. The connection section 24 connects to the memory card by the memory card being inserted into the slot portion 241. The connection section 24 is provided with a terminal for contact communication with the memory card inserted in the slot portion 241. The connection section 24 is provided with a printing device terminal portion 242 that inputs and outputs data to and from the storage device 4 inserted into the slot portion 241.

FIG. 1 illustrates a case in which the storage device 4 is inserted into the slot portion 241 and the storage device 4 and the connection section 24 are connected to each other. The connection section 24 is configured such that it is possible to insert and remove a storage device other than the storage device 4 having the same shape as the storage device 4.

The storage device 4 is a TSE (Technische Sicherheitseinrichtung) memory card, for example. The shape of the storage device 4, that is, the shape of the TSE memory card may be the shape of an SD memory card, the shape of a microSD, or another shape. The storage device 4 may be another memory card instead of the TSE memory card.

The storage device 4 stores, as fiscal information, transaction-related information TRJ including transaction information relating to transactions performed at stores or the like that sell products. In other words, in the embodiment, the printing device 2 connected to the storage device 4, which is a TSE memory card, is a fiscal printer. Here, the fiscal information is, for example, information referred to by a national institution such as the government for ascertaining the actual state of transactions at the store when the national institution collects tax from the store.

The storage device 4 is provided with a storage device control section 40 and a storage device terminal portion 41.

The storage device control section 40 controls the entirety of the storage device 4. The storage device control section 40 is provided with a storage device processor 400 and a storage device storage section 410.

The storage device processor 400 is a CPU, an MPU, or the like, for example. The storage device processor 400 executes various programs.

In the storage device control section 40, the storage device processor 400 reads and executes the control program 410A stored in the storage device storage section 410 and performs various processes through the cooperation of hardware and software.

The storage device storage section 410 stores a control program 410A to be executed by the storage device processor 400, data to be processed by the storage device processor 400, and the like. The storage device storage section 410 includes a non-volatile storage region that stores programs, data, and the like in a non-volatile manner.

The storage region of the storage device storage section 410 contains a card information storage region KA1 and a fiscal information storage region KA2. The card information storage region KA1 stores card information KJ relating to the storage device 4, such as the type of memory card, the storage capacity, the read speed, and the write speed. The transaction-related information TRJ is stored in the fiscal information storage region KA2. The storage device storage section 410 may be provided with a volatile storage region and may configure a working area that temporarily stores a program to be executed by the storage device processor 400, data to be processed, and the like.

The storage device terminal portion 41 is provided with terminals for contact communication with the terminals provided in the printing device terminal portion 242 when connected to the connection section 24 of the printing device 2. The storage device terminal portion 41 performs inputting and outputting of data by contact communication with the printing device 2 in a state in which the storage device 4 is inserted into the slot portion 241. Functional Configuration of Printing Device Control Section 20

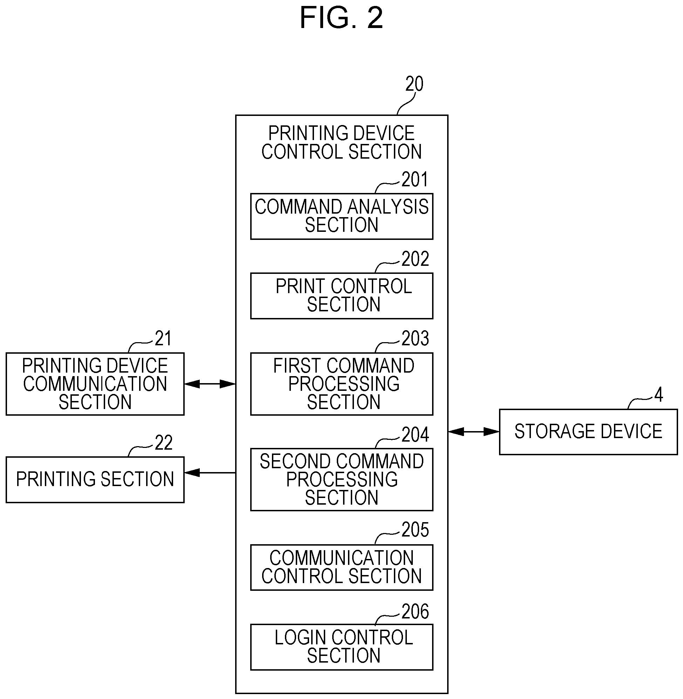

Hereinafter, the functional configuration of the printing device control section 20 will be described with reference to FIG. 2. FIG. 2 is a diagram illustrating an example of the functional configuration of the printing device control section 20. For convenience of description, FIG. 2 illustrates the printing device communication section 21, the printing section 22, and the storage device 4 together with the printing device control section 20.

As illustrated in FIG. 2, the printing device control section 20 is provided with a command analysis section 201, a print control section 202, a first command processing section 203, a second command processing section 204, a communication control section 205, and a login control section 206. The functional sections are realized by the printing device processor 200 executing the control program 210A.

The command analysis section 201 analyzes a command received by the printing device communication section 21. The command analysis section 201 determines whether the received command is a print command, a storage device control command KCD (described later), or another command. The command type is determined based on an instruction code, for example. When the command received by the printing device communication section 21 is the print command, the command analysis section 201 outputs the print command to the print control section 202. When the command received by the printing device communication section 21 is the storage device control command KCD, the command analysis section 201 outputs the storage device control command KCD to the first command processing section 203. When the command received by the printing device communication section 21 is another command different from either of the print command and the storage device control command KCD, the command analysis section 201 outputs the command to the second command processing section 204.

The storage device control command KCD is a command instructing the printing device 2 to execute a process with respect to the storage device 4 connected to the printing device 2. The storage device control command KCD is configured to contain at least an instruction code portion and a data portion.

The instruction code portion stores a dedicated instruction code of the storage device control command KCD.

The data portion stores data in a predetermined format. In the embodiment, JSON (JavaScript (registered trademark) Object Notation) format data is stored in the data portion. The data portion stores the data in the JSON format containing processing content data indicating the processing content with respect to the storage device 4.

The storage device control command KCD contains transmission source identification information indicating the transmission source of the storage device control command KCD, and transmission source communication information unique to the communication between the printing device 2 and the transmission source. The transmission source communication information is unique information relating to the communication between the printing device 2 and the transmission source of the storage device control command KCD. The transmission source communication information is information indicating a connection interface used for the communication between the printing device 2 and the transmission source of the storage device control command KCD, for example. The information indicating the connection interface is information indicating a USB connection, information indicating a Bluetooth (registered trademark) connection, or the like, for example. Instead of such information, the transmission source communication information may be a MAC (Media Access Control) address, a fixed IP (Internet Protocol) address, or the like. Each storage format of the transmission source identification information and the transmission source communication information in the storage device control command KCD may be any storage format. The storage device control command KCD is an example of a first command.

The print control section 202 controls the printing section 22 to print on the roll paper based on a print command received by the printing device communication section 21. For example, when the print command is a command relating to receipt issuance, the print control section 202 uses the printing section 22 to issue a receipt.

The first command processing section 203 executes a process based on the storage device control command KCD received by the printing device communication section 21. The first command processing section 203 generates a command instructing the storage device 4 connected to the connection section 24 to execute a process based on the processing content data stored in the data portion of the storage device control command KCD. Hereinafter, for convenience of description, the description will be given referring to a command that is generated based on the storage device control command KCD and that instructs the storage device 4 to execute the process as a processing instruction command. The control program 210A stored in the printing device storage section 210 of the printing device 2 contains a program that realizes a function of generating the processing instruction command that the storage device 4 is capable of processing. When generating the processing instruction command, the first command processing section 203 outputs the generated processing instruction command to the storage device 4 via the connection section 24.

For example, it is assumed that the processing content data of the processing content indicating access to the storage device 4 is stored in the data portion of the storage device control command KCD received from the terminal device 3. The access to the storage device 4 is to write or read information to or from the storage device 4. In this case, the first command processing section 203 generates, as the processing instruction command, a storage command instructing the storage of information. The first command processing section 203 outputs the storage command as the processing instruction command to the storage device 4 via the connection section 24.

When the first command processing section 203 receives the response data with respect to the processing instruction command from the storage device 4, the first command processing section 203 generates response data with respect to the storage device control command KCD based on the received response data. The first command processing section 203 outputs the generated response data to the communication control section 205.

The second command processing section 204 executes a process based on other commands different from either of the print command and the storage device control command KCD among the commands received by the printing device communication section 21. Examples of the other commands include a command for controlling a device connected to the printing device 2.

The communication control section 205 transmits response data with respect to the storage device control command KCD input from the first command processing section 203 to the terminal device 3 via the printing device communication section 21.

The login control section 206 controls logins from other devices to the printing device 2. Specifically, when the login control section 206 receives a request to log in to the printing device 2 from another device, the login control section 206 determines whether or not the login to the printing device 2 from the other device is permitted. The login control section 206 also controls logging into the storage device 4. Specifically, the login control section 206 makes a request to the storage device 4 to log in to the storage device 4.

### Process in which Terminal Device 3 Controls Printing Device 2

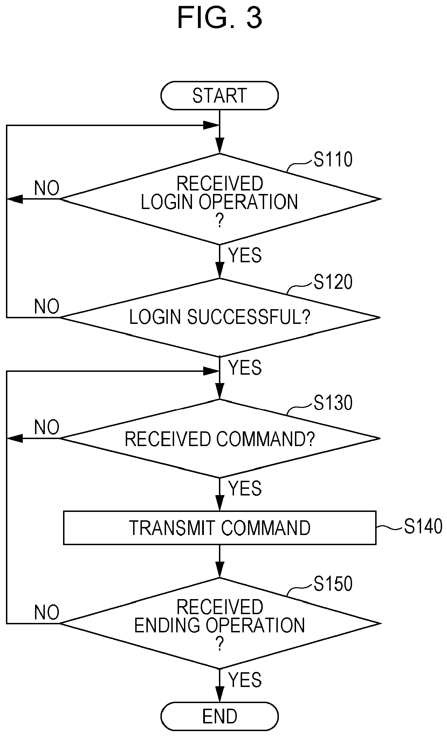

Hereinafter, with reference to FIG. 3, the process in which the terminal device 3 controls the printing device 2 will be described. FIG. 3 is a diagram illustrating an example of the flow of a process in which the terminal device 3 controls the printing device 2.

Hereinafter, as an example, description will be given of a case in which the POS application 310B is executed by the terminal control section 30 at a timing before the process of step S110 illustrated in FIG. 3 is performed.

The POS application execution section 3000 waits until a login operation is received from the user via the touch panel 31 (step S110). Here, the login operation is an operation of the terminal device 3 making a request to the printing device 2 to log in to the printing device 2. In the login operation, the user inputs the terminal device identification information assigned to the terminal device 3 into the terminal device 3. In other words, the POS application execution section 3000 receives the terminal device identification information assigned to the terminal device 3 through the login operation.

When the POS application execution section 3000 determines that a login operation from the user is received (step S110-YES), the POS application execution section 3000 transmits the first request containing the terminal device identification information received from the user through the login operation to the printing device 2. The first request is information for making a request to the printing device 2 to log in to the printing device 2 among the information that the terminal device 3 transmits to the printing device 2. The POS application execution section 3000 waits until receiving, as a response to the transmitted first request, information indicating whether or not to permit the login to the printing device 2. When the POS application execution section 3000 receives the information indicating whether or not the login to the printing device 2 is permitted, the POS application execution section 3000 determines whether or not the login to the printing device 2 is successful based on the information (step S120). Here, when the received information indicates permission to log in to the printing device 2, the POS application execution section 3000 determines that the login to the printing device 2 is successful. On the other hand, the POS application execution section 3000 determines that the login to the printing device 2 is a failure when the received information indicates that the login to the printing device 2 is rejected.

When the POS application execution section 3000 determines that the login to the printing device 2 is a failure (step S120 - NO), the POS application execution section 3000 causes the touch panel 31 to display information indicating that the login to the printing device 2 is a failure. The POS application execution section 3000 transitions to step S110 and waits again until a login operation is received from the user via the touch panel 31.

When the POS application execution section 3000 determines that the login to the printing device 2 is successful (step S120 - YES), the POS application execution section 3000 causes the touch panel 31 to display information indicating that the login to the printing device 2 is successful. The POS application execution section 3000 waits until a command for causing the printing device 2 to perform the process desired by the user is received via the touch panel 31 (step S130).

When the POS application execution section 3000 determines that the command is received (step S130 - YES), the POS application execution section 3000 transmits the command received in step S130 to the printing device 2 (step S140).

Next, the POS application execution section 3000 determines whether or not an operation for ending the control of the printing device 2 is received from the user via the touch panel 31 (step S150).

When the POS application execution section 3000 determines that the operation for ending the control of the printing device 2 is not received from the user (step S150 - NO), the POS application execution section 3000 transitions to step S130 and waits again until receiving a command that causes the printing device 2 to perform the process desired by the user via the touch panel 31.

On the other hand, when the POS application execution section 3000 determines that the operation for ending the control of the printing device 2 is received from the user (step S150 - YES), the POS application execution section 3000 ends the process.

### Processes Relating to Login of Terminal Device 3 to Printing Device 2

Hereinafter, the processes relating to the login of the terminal device 3 to the printing device 2 will be described. The processes described hereinafter are only an example. In other words, in the printing system 1, a configuration may be adopted in which the login of the terminal device 3 to the printing device 2 may be performed by other processes.

The same secret key information is stored in advance in both the terminal device 3 and the printing device 2. The secret key information is an encryption key corresponding to a public key encryption method. The method of storing the same secret key information in advance in both the terminal device 3 and the printing device 2 may be a known method or a method to be developed in the future.

When logging in to the printing device 2, the terminal device 3 transmits, to the printing device 2, a first request for requesting login to the printing device 2. The first request contains the terminal device identification information assigned to the terminal device 3. A case in which the terminal device 3 logs in to the printing device 2 is a case in which the login operation is received in step S110 described above, for example.

When the printing device 2 receives the first request, the printing device 2 generates challenge information. The challenge information is a random number, for example. The printing device 2 stores and transmits, to the terminal device 3, the generated challenge information and the terminal device identification information contained in the first request in association with each other.

When the terminal device 3 receives the challenge information from the printing device 2, the terminal device 3 generates a first hash value based on the secret key information stored in advance and the received challenge information. The terminal device 3 transmits the generated first hash value and the terminal device identification information to the printing device 2.

When the printing device 2 receives the first hash value and the terminal device identification information from the terminal device 3, the printing device 2 generates a second hash value based on the secret key information stored in advance and the challenge information associated with the received terminal device identification information. The printing device 2 compares the generated second hash value with the received first hash value to determine whether or not to permit the login of the terminal device 3 to the printing device 2. Specifically, when the generated second hash value and the received first hash value match, the printing device 2 determines that the login of the terminal device 3 to the printing device 2 is permitted. When the generated second hash value and the received first hash value do not match, the printing device 2 determines that the login of the terminal device 3 to the printing device 2 is to be rejected.

When the printing device 2 determines that the login of the terminal device 3 to the printing device 2 is permitted, the printing device 2 permits the login of the terminal device 3 to the printing device 2. The printing device 2 transmits information indicating the permission to log in to the printing device 2 to the terminal device 3.

On the other hand, when the printing device 2 determines that the login of the terminal device 3 to the printing device 2 is rejected, the printing device 2 rejects the login of the terminal device 3 to the printing device 2. The printing device 2 transmits information indicating the rejection to log in to the printing device 2 to the terminal device 3.

### Processes Performed by Printing Device 2 when Controlled by Terminal Device 3

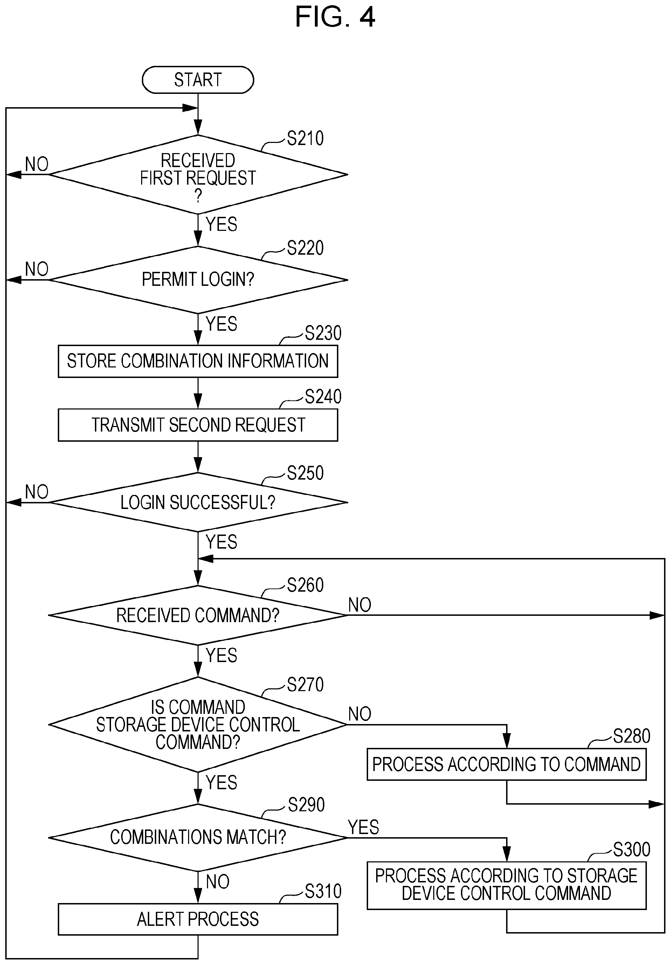

Hereinafter, with reference to FIG. 4, the processes performed by the printing device 2 when controlled by the terminal device 3 will be described. FIG. 4 is a diagram illustrating an example of the flow of a process performed by the printing device when controlled by the terminal device 3.

The login control section 206 waits until the first request described above is received from the terminal device 3 (step S210).

When the login control section 206 determines that the first request is received from the terminal device 3 (step S210 - YES), the login control section 206 determines whether or not to permit the login of the terminal device 3 to the printing device 2 based on the received first request (step S220).

When the login control section 206 determines that the login of the terminal device 3 to the printing device 2 is rejected (step S220 - NO), the process transitions to step S210 and the login control section 206 waits again until the first request is received from the terminal device 3.

On the other hand, when the login control section 206 determines that the login of the terminal device 3 to the printing device 2 is permitted (step S220 - YES), combination information is stored in the printing device storage section 210 (step S230) based on the first request received in step S210. Here, the combination information is information indicating a combination of the terminal device identification information and the terminal device communication information. As described above, the terminal device identification information is the information contained in the first request. The terminal device communication information is also information contained in the first request. The terminal device communication information is information unique to the communication between the printing device 2 and the terminal device 3. The terminal device communication information is information indicating a connection interface used for the communication between the printing device 2 and the terminal device 3, for example. The information indicating the connection interface is information indicating a USB connection, information indicating a Bluetooth (registered trademark) connection, or the like, for example. The terminal device communication information may be a MAC address, a fixed IP address, or the like instead of such information. However, the terminal device communication information is the same type of information as the transmission source communication information described above. In other words, for example, when the transmission source communication information is information indicating the connection interface, the terminal device communication information is information indicating the connection interface. For example, when the transmission source communication information is a MAC address, the terminal device communication information is also a MAC address. The storage format of each of the terminal device identification information and the terminal device communication information in the first request may be any storage format. The login control section 206 may also be configured to store the combination information in the storage device 4.

In step S230, the login control section 206 specifies the terminal device identification information and the terminal device communication information with reference to the first request received in step S210. The login control section 206 generates combination information indicating a combination of the specified terminal device identification information and the specified terminal device communication information. The login control section 206 stores the generated combination information in the printing device storage section 210.

After the process of step S230 is performed, the login control section 206 transmits the second request to the storage device 4 (step S240). Here, the second request is information for making a request to the storage device 4 to log in to the storage device 4 among the information that the printing device 2 transmits to the storage device 4. For example, the second request is a PIN (Personal Identification Number) code. Instead of the PIN code, the second request may be other information that makes a request to the storage device 4 to log in to the storage device 4 among the information that the printing device 2 transmits to the storage device 4. The login control section 206 waits until receiving, as a response to the transmitted second request, information indicating whether or not to permit the login to the storage device 4. When the login control section 206 receives the information indicating whether or not the login to the storage device 4 is permitted, the login control section 206 determines whether or not the login to the storage device 4 is successful based on the information (step S250). Here, when the received information indicates permission to log in to the storage device 4, the login control section 206 determines that the login to the storage device 4 is successful. On the other hand, when the received information indicates rejection of the login to the storage device 4, the login control section 206 determines that the login to the storage device 4 is a failure.

If the login control section 206 determines that the login to the storage device 4 is a failure (step S250 - NO), the login control section 206 performs a process in accordance with the failure to login to the storage device 4. The process may be any process, for example, a process of transmitting information indicating that the login to the storage device 4 is a failure to the terminal device 3 and causing the information to be displayed. The login control section 206 transitions to step S210, and waits again until the first request is received from the terminal device 3.

On the other hand, when the login control section 206 determines that the login to the storage device 4 is successful (step S250 - YES), the command analysis section 201 waits until a command is received from the terminal device 3 (step S260). The command to be awaited for reception from the terminal device 3 in step S250 may be any command that may be executed by the printing device 2.

When the command analysis section 201 determines that the command is received from the terminal device 3 (step S260 - YES), the command analysis section 201 determines whether or not the command received in step S260 is the storage device control command KCD (step S270). As described above, the storage device control command KCD contains the transmission source identification information and the transmission source communication information. When the transmission source of the storage device control command KCD is the terminal device 3, the transmission source identification information contained in the storage device control command KCD is information matching the terminal device identification information. In this case, the transmission source communication information contained in the storage device control command KCD is information matching the terminal device communication information.

When the command analysis section 201 determines that the command received in step S260 is not the storage device control command KCD (step S270-NO), the print control section 202 or the second command processing section 204 performs a process according to the command (step S280). In other words, when the command is a print command, the print control section 202 causes the printing section 22 to perform printing according to the command. When the command is a different command from both the storage device control command KCD and the print command, the second command processing section 204 performs processing according to the command. The command analysis section 201 transitions to step S260 and waits again until a command is received from the terminal device 3.

On the other hand, when the command analysis section 201 determines that the command received in step S260 is the storage device control command KCD (step S270 - YES), the first command processing section 203 determines whether or not the combination of the transmission source identification information contained in the received storage device control command KCD and the transmission source communication information contained in the received storage device control command KCD matches the combination indicated by the combination information stored in the printing device storage section 210 (step S290). When the terminal device identification information contained in the combination information and the transmission source identification information match and the terminal device communication information contained in the combination information and the transmission source communication information match, the first command processing section 203 determines that the combination of the transmission source identification information and the transmission source communication information matches the combination indicated by the combination information. On the other hand, when one or both of the terminal device identification information contained in the combination information and the transmission source identification information not matching, and the terminal device communication information contained in the combination information and the transmission source communication information not matching is realized, the first command processing section 203 determines that the combination of the transmission source identification information and the transmission source communication information does not match the combination indicated by the combination information.

When the first command processing section 203 determines that the combination of the transmission source identification information contained in the received storage device control command KCD and the transmission source communication information contained in the received storage device control command KCD does not match the combination indicated by the combination information stored in the printing device storage section 210 (step S290 - NO), the first command processing section 203 performs an alert process (step S310). Here, the alert process is a process of notifying an administrator of the printing device 2 that an unauthorized access to the storage device 4 is performed. For example, the alert process is a process of transmitting information indicating that unauthorized access to the storage device 4 is performed to an information processing device used by the administrator of the printing device 2, a process of outputting a sound indicating that unauthorized access to the storage device 4 is performed, a process of blinking a light indicating that unauthorized access to the storage device 4 is performed, or the like, but is not limited thereto. After performing the alert process, the login control section 206 transitions to step S210 and waits again until the first request is received from the terminal device 3.

On the other hand, when the first command processing section 203 determines that the combination of the transmission source identification information contained in the received storage device control command KCD and the transmission source communication information contained in the received storage device control command KCD matches the combination indicated by the combination information stored in the printing device storage section 210 (step S290 - YES), the first command processing section 203 performs a process according to the received storage device control command KCD (step S300). In other words, the first command processing section 203 executes the storage device control command KCD. Specifically, in step S300, when processing content data having processing content indicating access to the storage device 4 is stored in the data portion of the storage device control command KCD received from the terminal device 3, the first command processing section 203 generates a storage command instructing the storage of the processing content data as the processing instruction command. The first command processing section 203 outputs the storage command as the processing instruction command to the storage device 4 via the connection section 24. In other words, the first command processing section 203 transmits the data stored in the data portion of the received storage device control command KCD to the storage device 4 and causes the storage device 4 to store the data. The data contains the transaction-related information TRJ described above, for example. Here, the transaction-related information TRJ contains transaction information. Therefore, it can be said that the data includes transaction information.

After the process of step S300 is performed, the command analysis section 201 transitions to step S260 and waits again until a command is received from the terminal device 3.

As described above, after the login to the printing device 2 by the terminal device 3 is successful, the printing device 2 determines whether or not the transmission source of the storage device control command KCD is the terminal device 3 based on the combination information. As a result, the printing device 2 is capable of suppressing the execution of the storage device control command KCD transmitted by an unintended person. Specifically, even when the printing device 2 receives the storage device control command KCD transmitted from another terminal device using the terminal device identification information assigned to the terminal device 3 that is logged in to the printing device 2, it is possible to suppress the execution of the storage device control command KCD. This means that it is possible to suppress the unauthorized use of the printing device 2 while causing the terminal device 3 to repeatedly access the printing device 2 through a single login to the printing device 2 without causing the terminal device 3 to repeatedly log in to the printing device 2 each time the terminal device 3 accesses the printing device 2.

### Processing Performed by Storage Device 4 when Second Request Received from Printing Device 2

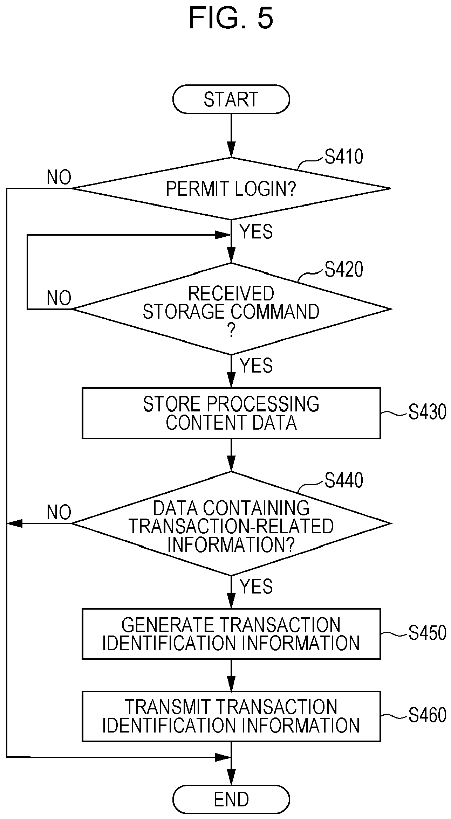

Hereinafter, the processing performed by the storage device 4 when the second request is received from the printing device 2 will be described with reference to FIG. 5. FIG. 5 is a diagram illustrating an example of the flow of a process performed by the storage device 4 when the second request is received from the printing device 2.

After receiving the second request, the storage device processor 400 determines whether to permit the login of the printing device 2 to the storage device 4 based on the received second request (step S410). Here, in the embodiment, the second request is a PIN code. Therefore, in the embodiment, the storage device processor 400 refers to the PIN code stored in advance in the storage device storage section 410 in step S410 and determines whether or not the referenced PIN code and the second request match. When the referenced PIN code and the second request do not match, the storage device processor 400 rejects the login of the printing device 2 to the storage device 4. On the other hand, when the referenced PIN code and the second request match, the storage device processor 400 permits the login of the printing device 2 to the storage device 4.

When the storage device processor 400 rejects the login of the printing device 2 to the storage device 4 (step S410 - NO), the storage device processor 400 outputs information indicating the rejection of the login of the printing device 2 to the storage device 4 to the printing device 2 and ends the process.

On the other hand, when the storage device processor 400 permits the login of the printing device 2 to the storage device 4 (step S410 - YES), the storage device processor 400 transmits information indicating the permission for the printing device 2 to log in to the storage device 4 to the printing device 2. The storage device processor 400 waits until a storage command is received from the printing device 2 (step S420).

When the storage device processor 400 determines that the storage command is received from the printing device 2 (step S420 - YES), the storage device processor 400 causes the storage device storage section 410 to store the processing content data instructed by the storage command received in step S420 (step S430).

Next, the storage device processor 400 determines whether or not the processing content data instructed to be stored by the storage command received in step S420 is data containing transaction-related information TRJ (step S440).

When the storage device processor 400 determines that the processing content data instructed to be stored by the storage command received in step S420 is not the data containing the transaction-related information TRJ (step S440 - NO), the process is ended.

On the other hand, when the storage device processor 400 determines that the processing content data instructed to be stored by the storage command received in step S420 is the data containing the transaction-related information TRJ (step S440 - YES), the storage device processor 400 generates transaction identification information corresponding to the transaction information contained in the transaction-related information (step S450). Here, the transaction identification information corresponding to certain transaction information is information associated with the transaction information in a one-to-one correspondence. In other words, the transaction identification information is information capable of identifying the transaction information.

Next, the storage device processor 400 transmits the transaction identification information generated in step S450 to the printing device 2 (step S460) and ends the process. When receiving the transaction identification information transmitted by the storage device 4 in step S460, the printing device 2 transmits the received transaction identification information to the terminal device 3.

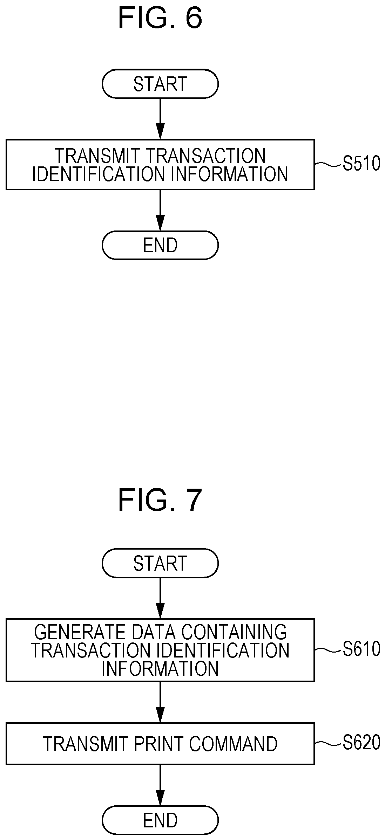

Here, FIG. 6 is a diagram illustrating an example of the flow of a process performed by the printing device 2 when transaction identification information is received.

After receiving the transaction identification information, the communication control section 205 transmits the received transaction identification information to the terminal device 3 (step S510) and ends the process.

Here, FIG. 7 is a diagram illustrating an example of the flow of a process performed by the terminal device 3 when the transaction identification information is received.

After receiving the transaction identification information, the POS application execution section 3000 generates data containing the received transaction identification information (step S610).

Next, the POS application execution section 3000 stores the data generated in step S610, transmits a print command to the printing device 2 to print at least the transaction identification information of the information contained in the data to the printing device 2 (step S620), and ends the process. In other words, the print command is a command for instructing the printing device 2 to print at least the transaction identification information of the information contained in the data. When receiving the print command, the printing device 2 prints at least the transaction identification information of the information contained in the data according to the received print command.

In this manner, when the printing system 1 causes the storage device 4 to store the transaction information, the printing system 1 causes the printing device 2 to print the transaction identification information corresponding to the transaction information stored in the storage device 4. Accordingly, the printing system 1 is capable of leaving a history of storing the transaction information in the storage device 4.

### Operating State of Printing Device 2 and Processing of Storage Device Control Command KCD by Printing Device 2

The operating state of the printing device 2 and the processing of the storage device control command KCD by the printing device 2 will be described below.

It is possible to switch the operating state of the printing device 2 to one of two states, for example. One of the two states is a normal operating state. When the printing device 2 in the normal operating state receives a print command instructing the printing device 2 to print from the terminal device 3, the printing device 2 causes the printing section 22 to perform printing in accordance with the received print command. The other of the two states is an offline state. When the printing device control section 20 detects a state in which a consumable item such as a printing medium is absent, an error state such as a cover being opened, or the like using a detector, the printing device communication section 21 causes a signal indicating the offline state, status information, or the like to be output to the terminal device 3 according to a communication standard between the printing device communication section 21 and the terminal device 3. When the terminal device 3 acquires the offline state from the printing device 2, the terminal device 3 determines that the printing device is in a state in which printing is not possible and does not transmit commands, data, or the like. The printing device 2 in the offline state does not cause the printing section 22 to print even when the printing device 2 receives a print command from the terminal device 3 to instruct the printing device 2 to print. When the printing device communication section 21 receives commands, data, and the like from the terminal device 3 in the normal operating state, the printing device communication section 21 temporarily stores the received commands, data, and the like in a communication storage portion (not illustrated) in the printing device communication section 21. In the printing device communication section 21, the printing device control section 20 reads the temporarily stored commands, data, and the like and performs processes such as printing. The printing device control section 20 renders a storage region of the communication storage portion in which the read and processed commands, data, and the like are stored possible to erase or overwrite in preparation for the storage of the next commands, data, and the like and secures free space in the storage region. When the received commands, data, and the like are accumulated in the communication storage portion and the free space in the storage region runs out since the printing device 2 in the offline state is hypothetically unable to perform processes such as printing even if the printing device 2 receives commands, data, and the like from the terminal device 3, an overflow occurs. When the printing device control section 20 detects that the consumable items are filled, the cover is closed, and the like, and the operating state of the printing device 2 is returned to the normal operating state from the offline state, if the communication storage portion overflows, the next commands, data, and the like may not be received. In order to avoid such an overflow, the printing device control section 20 in the offline state reads and discards the received commands, data, and the like, does not store the commands, data, and the like in the communication storage portion, and secures free space in the storage region.

However, it is inconvenient for the user that the fiscal information, that is, the transaction-related information may not be stored in the storage device 4 when the operating state of the printing device 2 is the offline state. This is because since the purpose of storing the transaction-related information TRJ is the thorough collection of taxes from the store by the national institution, it is necessary to store the transaction-related information TRJ in the storage device 4 without omission.

Therefore, when the operating state of the printing device 2 is the offline state and the printing device 2 receives the storage device control command KCD from the terminal device 3, the printing device 2 transmits a storage command for storing the transaction-related information TRJ to the storage device 4. Accordingly, the printing device 2 is capable of storing the transaction-related information in the storage device 4 regardless of whether the operating state of the printing device 2 is the normal operating state or the offline state. In other words, the printing device 2 is capable of suppressing the omission of the storage of the transaction-related information TRJ that occurs depending on the operating state of the printing device 2.

As described above, a printing system according to the embodiment includes a printing device including a printing section, a terminal device that communicates with the printing device, and a storage device connected to the printing device, in which the terminal device transmits, to the printing device, a first request for requesting login to the printing device, and the printing device determines whether or not to permit the terminal device to log in to the printing device when the first request is received from the terminal device, stores combination information indicating a combination of terminal device identification information assigned to the terminal device and terminal device communication information relating to communication between the printing device and the terminal device when the terminal device is permitted to log in to the printing device, and executes a first command instructing the printing device to execute processing with respect to the storage device when a combination of transmission source identification information indicating a transmission source of the first command and transmission source communication information relating to communication between the printing device and the transmission source matches the combination indicated by the combination information in a case in which the first command is received from the terminal device after the terminal device is permitted to log in to the printing device. Accordingly, the printing system is capable of suppressing the execution of the first command transmitted by an unintended person.

In the printing system, a configuration may be used in which the printing device transmits to the storage device a second request for requesting login to the storage device when the terminal device is permitted to log in to the printing device, and the storage device determines whether or not to permit the printing device to log in to the storage device when the storage device receives the second request from the printing device.

In the printing system, a configuration may be used in which the first command contains transaction information relating to a transaction, when the printing device receives the first command from the terminal device after permitting the terminal device to log in to the printing device, the printing device transmits the transaction information to the storage device based on the first command, and when the storage device receives the transaction information from the printing device, the storage device stores the transaction information.

In the printing system, a configuration may be used in which when the storage device receives the transaction information from the printing device, the storage device generates transaction identification information corresponding to the transaction information and transmits to the printing device the transaction identification information that is generated, and when the printing device receives the transaction identification information from the storage device, the printing device transmits to the terminal device the transaction identification information that is received.

In the printing system, a configuration may be used in which the printing device is configured to switch between a normal operating state in which the printing section is caused to perform printing when a second command instructing the printing device to perform printing is received from the terminal device, and an offline state in which the printing section is not caused to perform printing when the second command instructing the printing device to perform printing is received from the terminal device, and the printing device transmits the transaction information to the storage device when the printing device in the offline state receives the first command from the terminal device.

In the printing system, a configuration may be used in which the terminal device and the printing device store secret key information, the first request contains the terminal device identification information, when the printing device receives the first request, the printing device generates challenge information, stores the challenge information that is generated and the terminal device identification information that is contained in the first request in association with each other, and transmits the challenge information to the terminal device, when the terminal device receives the challenge information from the printing device, the terminal device generates a first hash value based on the secret key information that is stored and the challenge information that is received and transmits the first hash value that is generated and the terminal device identification information to the printing device, and when the printing device receives the first hash value and the terminal device identification information from the terminal device, the printing device generates a second hash value based on the secret key information that is stored and the challenge information associated with the terminal device identification information that is received and compares the second hash value that is generated and the first hash value that is received to determine whether or not to permit the terminal device to log in to the printing device.

The embodiment of the present disclosure is described above in detail with reference to the drawings. However, the specific configuration is not limited to this embodiment, and may be changed, replaced, deleted, or the like without departing from the gist of the present disclosure.

A program for realizing the functions of any component in the above-described devices may be recorded on a computer-readable recording medium, and a computer system may be caused to read and execute the program. Here, the devices are the printing device 2, the terminal device 3, the storage device 4, and the like, for example. Here, the "computer system" includes an OS (Operating System) and hardware such as peripheral devices. The "computer-readable recording medium" refers to a portable medium such as a flexible disk, a magneto-optical disk, a ROM, a CD (Compact Disk)-ROM, and a storage device such as a hard disk embedded in a computer system. Furthermore, the term "computer-readable recording medium" includes memory that holds a program for a fixed time, such as volatile memory in an inner portion of a computer system serving as a server or a client when a program is transmitted via a network such as the Internet or a communication line such as a telephone line.

The program may be transmitted from a computer system storing the program in a storage device or the like to another computer system via a transmission medium or by a transmission wave in the transmission medium. Here, the "transmission medium" for transmitting a program refers to a medium having a function of transmitting information, such as a network such as the Internet or a communication line such as a telephone line.

The program may be a program for realizing a portion of the functions described above. Furthermore, the program may be a program capable of realizing the functions described above in combination with a program already recorded in the computer system, that is, a so-called difference file or a difference program.

## Claims

1. A printing system comprising:
a printing device including a printing section;
a terminal device that communicates with the printing device; and
a storage device connected to the printing device, wherein
the terminal device transmits, to the printing device, a first request for requesting login to the printing device, and
the printing device
determines whether or not to permit the terminal device to log in to the printing device when the first request is received from the terminal device,
stores combination information indicating a combination of terminal device identification information assigned to the terminal device and terminal device communication information relating to communication between the printing device and the terminal device when the terminal device is permitted to log in to the printing device, and
executes a first command instructing the printing device to execute processing with respect to the storage device when a combination of transmission source identification information indicating a transmission source of the first command and transmission source communication information relating to communication between the printing device and the transmission source matches the combination indicated by the combination information in a case in which the first command is received from the terminal device after the terminal device is permitted to log in to the printing device.

2. The printing system according to claim 1, wherein
the printing device transmits to the storage device a second request for requesting login to the storage device when the terminal device is permitted to log in to the printing device, and
the storage device determines whether or not to permit the printing device to log in to the storage device when the storage device receives the second request from the printing device.

3. The printing system according to claim 1 or claim 2, wherein
the first command contains transaction information relating to a transaction,
when the printing device receives the first command from the terminal device after permitting the terminal device to log in to the printing device, the printing device transmits, based on the first command, the transaction information to the storage device, and
when the storage device receives the transaction information from the printing device, the storage device stores the transaction information.

4. The printing system according to claim 3, wherein
when the storage device receives the transaction information from the printing device, the storage device generates transaction identification information corresponding to the transaction information and transmits to the printing device the transaction identification information that is generated, and
when the printing device receives the transaction identification information from the storage device, the printing device transmits to the terminal device the transaction identification information that is received.

5. The printing system according to claim 3 or claim 4, wherein
the printing device is configured to switch between a normal operating state in which the printing section performs printing when a second command instructing the printing device to perform printing is received from the terminal device, and an offline state in which the printing section does not perform printing when the second command is received from the terminal device, and
the printing device transmits the transaction information to the storage device when the printing device in the offline state receives the first command from the terminal device.

6. The printing system according to any of claims 1 to 5, wherein
the terminal device and the printing device store secret key information,
the first request contains the terminal device identification information,
when the printing device receives the first request, the printing device generates challenge information, stores the challenge information that is generated and the terminal device identification information that is contained in the first request in association with each other, and transmits the challenge information to the terminal device,
when the terminal device receives the challenge information from the printing device, the terminal device generates, based on the secret key information that is stored and the challenge information that is received, a first hash value and transmits the first hash value that is generated and the terminal device identification information to the printing device, and
when the printing device receives the first hash value and the terminal device identification information from the terminal device, the printing device generates, based on the secret key information that is stored and the challenge information associated with the terminal device identification information that is received, a second hash value and compares the second hash value that is generated and the first hash value that is received to determine whether or not to permit the terminal device to log in to the printing device.

7. A printing device that communicates with a terminal device and is connected to a storage device, the printing device comprising:
a printing section that executes printing, wherein
the printing device
determines whether or not to permit the terminal device to log in to the printing device when a first request for requesting login to the printing device is received from the terminal device,
stores combination information indicating a combination of terminal device identification information assigned to the terminal device and terminal device communication information relating to communication between the printing device and the terminal device when the terminal device is permitted to log in to the printing device, and
executes a first command instructing the printing device to execute processing with respect to the storage device when a combination of transmission source identification information indicating a transmission source of the first command and transmission source communication information unique to communication between the printing device and the transmission source matches the combination indicated by the combination information in a case in which the first command is received from the terminal device after the terminal device is permitted to log in to the printing device.

8. The printing device according to claim 7, wherein
the printing device transmits to the storage device a second request for requesting login to the storage device when the terminal device is permitted to log in to the printing device,
the printing device receives, from the storage device, information indicating whether or not the printing device is permitted to log in to the storage device, and
the printing device determines, based on the information that is received, whether or not logging in to the storage device is permitted.

9. The printing device according to claim 7 or claim 8, wherein
the first command contains transaction information relating to a transaction, and
when the printing device receives the first command from the terminal device after permitting the terminal device to log in to the printing device, the printing device transmits, based on the first command, the transaction information to the storage device.

10. The printing device according to claim 9, wherein
when the printing device receives the transaction identification information corresponding to the transaction information from the storage device, the printing device transmits to the terminal device the transaction identification information that is received.

11. The printing device according to claim 9 or claim 10, wherein
the printing device is configured to switch between a normal operating state in which the printing section is caused to perform printing when a second command for instructing the printing device to perform printing is received from the terminal device, and an offline state in which the printing section is not caused to perform printing when the second command is received from the terminal device, and
the printing device transmits the transaction information to the storage device when the printing device in the offline state receives the first command from the terminal device.

12. The printing device according to any of claims 7 to 11, wherein
the printing device stores secret key information,
the first request contains the terminal device identification information,
when the printing device receives the first request, the printing device generates challenge information, stores the challenge information that is generated and the terminal device identification information that is contained in the first request in association with each other, and transmits the challenge information to the terminal device,
the printing device receives a first hash value and the terminal device identification information that are transmitted from the terminal device in response to the challenge information that is transmitted, and
the printing device generates, based on the secret key information that is stored and the challenge information associated with the terminal device identification information that is received, a second hash value and compares the second hash value that is generated and the first hash value that is received to determine whether or not to permit the terminal device to log in to the printing device.

13. A control method of a printing system including
a printing device provided with a printing section,
a terminal device that communicates with the printing device, and
a storage device connected to the printing device, the control method comprising:
transmitting, by the terminal device, to the printing device, a first request for requesting login to the printing device;
determining, by the printing device, whether or not to permit the terminal device to log in to the printing device when the printing device receives the first request from the terminal device;
storing, by the printing device, combination information indicating a combination of terminal device identification information assigned to the terminal device and terminal device communication information relating to communication between the printing device and the terminal device when the printing device permits the terminal device to log in to the printing device; and
executing, by the printing device, a first command instructing the printing device to execute processing with respect to the storage device when a combination of transmission source identification information indicating a transmission source of the first command and transmission source communication information unique to communication between the printing device and the transmission source matches the combination indicated by the combination information in a case in which the printing device receives the first command after the terminal device is permitted to log in to the printing device.

14. The control method of a printing system according to claim 13, wherein
the printing device transmits to the storage device a second request for requesting login to the storage device when the terminal device is permitted to log in to the printing device, and
the storage device determines whether or not to permit the printing device to log in to the storage device when the storage device receives the second request from the printing device.

15. The control method of a printing system according to claim 13 or claim 14, wherein
the first command contains transaction information relating to a transaction,
when the printing device receives the first command from the terminal device after permitting the terminal device to log in to the printing device, the printing device transmits, based on the first command, the transaction information to the storage device, and
when the storage device receives the transaction information from the printing device, the storage device stores the transaction information.
